# FASCICULE DE BREVET EUROPEEN

(11) **EP 3 952 651 B1**
(45) Date de publication et mention de la délivrance du brevet: **23.04.2025**
(21) Numéro de dépôt: 20709629.8
(22) Date de dépôt: 16.03.2020
(51) Int. Cl.: A01N 43/22, A01P 13/00

(54) **UTILISATION DE DERIVES DE BENZOXEPINE A TITRE D'HERBICIDE**
VERWENDUNG VON BENZOXEPINDERIVATEN ALS HERBIZID
USE OF BENZOXEPINE DERIVATIVES AS HERBICIDES

(30) Priorité: 12.04.2019 FR 1903962
(43) Date de publication de la demande: 16.02.2022
(73) Titulaire: Ecole Polytechnique, 91128 Palaiseau Cedex (FR); Centre National de la Recherche Scientifique, 75794 Paris Cedex 16 (FR); SORBONNE UNIVERSITE, 75006 Paris (FR)
(72) Inventeur: NAY, Bastien, 75014 Paris (FR); BAUDOUIN, Emmanuel, 94320 Thiais (FR); ZHANG, Wei, 94220 Charenton le Pont (FR)
(74) Mandataire: Cabinet Nony
(86) Numéro de dépôt international: PCT/EP2020/057141
(87) Numéro de publication internationale: WO 2020/207714

(56) Documents cités:
- YOSHIDA M ET AL: "Total synthesis of radulanin H and proposed structure of radulanin E", TETRAHEDRON, ELSEVIER SCIENCE PUBLISHERS, AMSTERDAM, NL, vol. 65, no. 29-30, 18 July 2009 (2009-07-18), pages 5702 - 5708, XP026714618, ISSN: 0040-4020, [retrieved on 20090518], DOI: 10.1016/J.TET.2009.05.027
- ASAKAWA Y ET AL: "Bibenzyls from Radula tokiensis and R. Japonica", PHYTOCHEMISTRY, PERGAMON PRESS, GB, vol. 20, no. 4, 1 January 1981 (1981-01-01), pages 858 - 859, XP026660185, ISSN: 0031-9422, [retrieved on 19810101], DOI: 10.1016/0031-9422(81)85201-6
- YOSHINORI ASAKAWA ET AL: "New bibenzyls from Radula complanata", PHYTOCHEMISTRY, vol. 17, no. 12, 1 January 1978 (1978-01-01), pages 2115 - 2117, XP055156221, ISSN: 0031-9422, DOI: 10.1016/S0031-9422(00)89292-4
- MACAS F A ET AL: "Synthesis of heliannane skeletons. Facile preparation of (+/-)-heliannuol D", TETRAHEDRON, ELSEVIER SCIENCE PUBLISHERS, AMSTERDAM, NL, vol. 59, no. 10, 3 March 2003 (2003-03-03), pages 1679 - 1683, XP004410942, ISSN: 0040-4020, DOI: 10.1016/S0040-4020(03)00134-0

## Description

### Domaine technique

La présente invention concerne le domaine des herbicides utiles pour lutter contre la prolifération de plantes indésirables. L'invention vise en particulier l'utilisation de dérivés de benzoxépine à titre d'herbicide.

### Technique antérieure

Un herbicide est un produit chimique se présentant sous la forme d'une substance active ou d'une composition phytosanitaire efficace pour lutter contre la prolifération des plantes indésirables.

Un herbicide peut en particulier être dit total s'il détruit toutes sortes de plantes ou dit sélectif s'il tue uniquement une ou plusieurs catégories de plantes indésirables. De même, il peut être qualifié à travers son mode d'action, par exemple à pénétration racinaire, systémique ou encore de post-levée.

Un « herbicide à pénétration racinaire » est un herbicide qui agit en étant absorbé par les racines de la plante, alors qu'un « herbicide foliaire » est absorbé par la plante au niveau des feuilles.

Un « herbicide systémique » agit en se diffusant dans l'ensemble de la plante par l'intermédiaire de la sève, par opposition à un « herbicide de contact » qui détruit uniquement les surfaces sur lesquelles il est appliqué et est donc en contact.

Enfin, un « herbicide de post-levée » agit sur le végétal après l'émergence des premières plantules, tandis qu'un « herbicide de pré-levée » permet d'agir dès leur germination.

A l'heure actuelle, les herbicides utilisés sont principalement d'origine synthétique à l'image notamment des composés aromatiques, des composés de structure hétérocycle ou encore du Glyphosate. Or, l'innocuité de ces composés à l'égard de l'environnement est clairement aujourd'hui remise en cause.

Il existe donc un besoin de disposer de nouveaux herbicides efficaces à l'égard des plantes indésirables mais dont les effets secondaires à l'égard de l'environnement sont en revanche significativement réduits par opposition à ceux précités.

Une approche pour répondre à cette attente est de considérer la valorisation de composés dits d'origine naturelle plus assimilables par l'environnement.

Ainsi, l'acide lunularique, qui est d'origine naturelle, a par exemple été identifié comme favorisant la dormance de la plante *Lunularia cruciata* (Valio et al., Nature 1969, 223, 1176-1178) avec un mécanisme ciblant la voie de l'acide abscissique chez les plantes (Yoshikawa et al., Biosci. Biotechnol. Biochem. 2002, 66 840-846). Cependant, pour de nombreuses applications, il n'est pas suffisant de stopper la croissance de la plante. Des benzoxépines herbicides sont décrites par MACAS et al.: "Synthesis of heliannane skeletons. Facile preparation of (+/-)-heliannuol D", TETRAHEDRON, vol. 59, no. 10, 3 mars 2003, pages 1679-1683.

La présente invention vise donc à titre principal à proposer une nouvelle classe d'herbicides répondant à ces attentes.

### Exposé de l'invention

Ainsi, la présente invention a pour premier objet une utilisation à titre d'herbicide d'au moins un composé choisi parmi les composés de formule générale (I) répondant à la formule (Ia) ci-dessous.

Contre toute attente, les inventeurs ont en effet découvert que les composés de formule générale (I), qui sont des dérivés de benzoxépine apparentés à la radulanine, à savoir un composé existant naturellement au niveau des plantes hépatiques, manifestent une activité herbicide significative.

Certes, le document CA 1 222 755 suggère la mise en œuvre de dérivés benzoxépinesulfonamide à titre d'herbicide. Toutefois, les composés selon l'invention se distinguent de ces dérivés antérieurs par la présence d'un motif arylalkyle au niveau du cycle benzoxépine. Or, comme illustré dans les exemples ci-après, la présence d'un tel motif renforce significativement l'activité herbicide de ces derniers au terme de 24h à l'égard de plantes dites indésirables.

Selon un autre de ses aspects, la présente invention concerne une composition phytotoxique comprenant, notamment à titre de substance active herbicide, au moins un composé choisi parmi les composés de formule générale (I) tel que défini précédemment ainsi que leurs sels organiques ou inorganiques et leurs isomères, en combinaison avec au moins un additif choisi parmi les fertilisants, régulateurs de croissance, et herbicides annexes.

Selon un autre de ses aspects, la présente invention concerne un procédé pour contrôler le développement et/ou traiter des plantes indésirables en surface d'une zone cible comprenant la mise en contact de la zone cible avec une quantité efficace d'au moins un composé choisi parmi les composés de formule générale (I) tel que défini précédemment ainsi que leurs sels organiques ou inorganiques et leurs isomères ou d'au moins une composition phytotoxique telle que définie précédemment.

D'autres caractéristiques, variantes et avantages de l'utilisation, de la composition phytotoxique ou du procédé selon l'invention ressortiront mieux à la lecture de la description détaillée et des exemples qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### Description détaillée

Comme précisé ci-dessus, la présente invention a pour premier objet une utilisation à titre d'herbicide d'au moins un composé choisi parmi les composés de formule générale (I) répondant à 1a formule (Ia) ci-dessous.

A titre représentatif des sels inorganiques on peut tout particulièrement citer les sels alcalins et alcalinoterreux.

A titre représentatif des sels organiques on peut tout particulièrement citer les sels d'ammonium.

Au sens de l'invention, en entend qualifier par « isomères » les isomères stériques et optiques.

Au sens de la présente invention, un halogène est de préférence choisi parmi F, Cl, Br et I, et de préférence parmi F et Cl. Sont notamment considérés dans le cadre de la présente invention, des composés de formule (I) dans laquelle un ou plusieurs radicaux alkyles sont des radicaux perfluorés.

Selon une variante préférée, R est un radical alkyle ou cycloalkyle de 1 à 5 atomes de carbone, éventuellement substitué par un ou plusieurs atomes d'halogène.

Selon la présente invention, le composé répond à la formule générale (Ia) dans laquelle :
- *n* est un entier variant de 1 à 6,
- R¹, R² et R³ représentent indépendamment les uns des autres, un atome d'hydrogène ou d'halogène, un radical alkyle en C₁ à C₅ ou un groupement choisi parmi -OH, -COOH, -COOR'', -OR" et -SO₂R"avec R" étant un radical alkyle en C₁ à C₅, avec les radicaux alkyle pouvant être substitués par un ou plusieurs atomes d'halogène ou groupements hydroxyles,
- R représente un radical alkyle ou cycloalkyle en C₁ à C₅, éventuellement substitué par un ou plusieurs atomes d'halogène, et
- le symbole 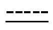 figure une liaison simple ou une liaison double en position 2, 3 ou 4 de l'hétérocycle condensé à 7 chainons avec au moins une double liaison étant présente, et leurs sels organiques ou inorganiques et leurs isomères.

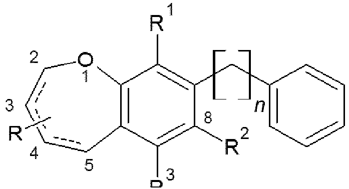

Selon une autre variante préférée, le composé de formule générale (I) répond plus particulièrement à la formule (Ib) 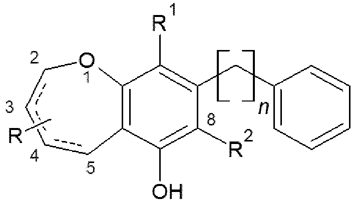 et leurs sels organiques ou inorganiques et leurs isomères, dans laquelle R¹, R², R et *n* sont définis comme précédemment.

Selon une autre variante préférée, R représente en formule (I) (Ia) ou (Ib) un radical alkyle de 1 à 3 atomes de carbone, et plus préférentiellement est un méthyle, le radical alkyle étant éventuellement substitué par un ou plusieurs atomes d'halogène.

Selon une autre variante préférée, n représente en formule (I) (Ia) ou (Ib) un entier variant de 1 à 3 et plus préférentiellement est égal à 2.

Selon une autre variante préférée, l'hétérocycle condensé possède une unique double-liaison en position 2, 3 ou 4, et de préférence en position 3.

Selon une autre variante préférée, R¹ représente en formule (I) (Ia) ou (Ib) un atome d'hydrogène ou un groupement -COOH et de préférence est un atome d'hydrogène.

Selon un mode de réalisation particulier, R² représente en formule (I) (Ia) ou (Ib) un atome d'hydrogène ou un groupement -COOH, ou un groupement -COOR'', avec R" étant un radical alkyle en C₁ à C₅, en particulier avec R" étant un méthyle, et de préférence un atome d'hydrogène ou un groupement -COOH. Avantageusement, R² représente en formule (I) (Ia) ou (Ib) un groupement -COOH.

Selon un mode de réalisation préféré de l'invention, le composé de formule générale (I) est choisi parmi les composés suivants et leurs sels organiques ou inorganiques et isomères :

| Nom | Formule développée |
|---|---|
| Composé A | 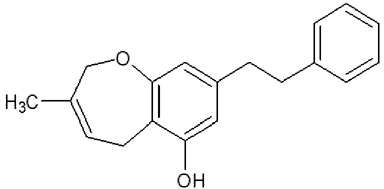 |
| Composé H | 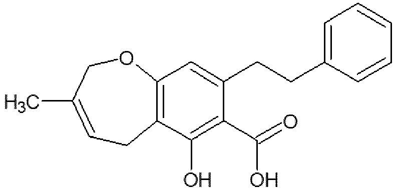 |
| Composé C | 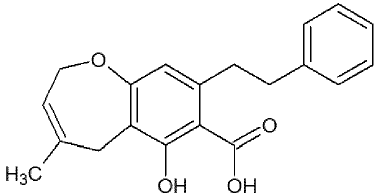 |
| Composé D | 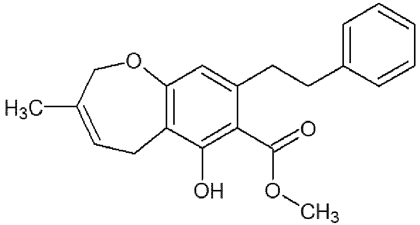 |

De préférence, ce composé est choisi parmi les composés, A, H et C ainsi que leurs sels et leurs isomères.

En particulier, le composé de formule (I) peut être conforme à la formule (Ic) comme suit : 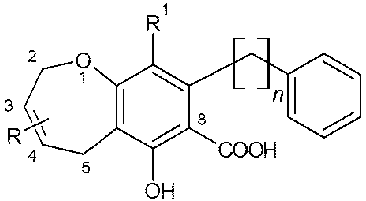 et l'un de ses sels organiques ou inorganiques et isomères, la position 3 ou 4 étant substituée par un radical R, avec R, R¹ et *n* étant définis comme précédemment.
Notamment, ce composé peut être choisi parmi les composés H et C ainsi que leurs sels et leurs isomères.

Selon un premier mode de réalisation, le composé selon l'invention est mis en œuvre sous une forme isolée, naturelle ou synthétique.

Au sens de l'invention, le terme « forme isolée » qualifie le fait que le composé selon l'invention est mis en œuvre sous une forme pure c'est-à-dire distincte d'un mélange avec d'autres composés, à l'image par exemple d'un extrait végétal le contenant en association avec d'autres substances.

Ainsi, ces composés peuvent être isolés d'extraits végétaux mais également être préparés par voie synthétique notamment comme illustré dans les exemples qui suivent. Différentes études sur la synthèse de tels composés sont également détaillées dans les documents Stefinovic et al., J. Org. Chem. 1998, 63, 2808-2809 ; Yoshida et al., Tetrahedron 2009, 5702-2708 ; Yamaguchi et al., Tetrahedron 2000, 41, 4787-4790 ; Yamaguchi et al., J. Org. Chem. 2005, 70, 7505-7511.

Selon un autre mode de réalisation, le composé selon l'invention est mis en œuvre sous la forme d'un extrait naturel, notamment végétal, le contenant.

En particulier, certains composés selon l'invention peuvent être mis en œuvre sous la forme d'un extrait de plantes hépatiques en contenant, notamment et de façon non limitative : *Radula variabilis, R. complanata, R. buccinifera, R. japonica, R. oyamensis, R. tokiensis, R. perrottetii, R. javanica* qui contiennent en général un mélange de ces composés et d'autres composés apparentés (Asakawa et al. Phytochemistry 1978, 17, 2005-2010; Phytochemistry 1978, 17, 2115-2117; Phytochemistry 1981, 20, 858-859; Phytochemistry 1982, 21, 2481-2490; Phytochemistry 1991, 30, 235-251; Phytochemistry 1991, 30, 325-328).

L'extrait peut notamment être obtenu par extraction mécanique, par exemple par pressage, ou par extraction chimique, notamment par lixiviation, macération, infusion. Le cas échéant, l'extraction peut être suivie d'une étape de purification par chromatographie ou cristallisation.

Selon encore un autre mode de réalisation, le composé selon l'invention peut être généré *in situ* ou juste avant emploi à partir d'un précurseur, par exemple par hydrolyse, notamment d'un ester.

Bien entendu, les différents composés de formule (I) peuvent être utilisés en mélange à titre de substance active herbicide selon l'invention.

Au sens de l'invention, on entend qualifier par « herbicide » tout composé ou toute composition ayant la propriété de tuer des végétaux dits indésirables, notamment des plantes.

Ces végétaux dits indésirables sont généralement des mousses, des algues, ou des mauvaises herbes, et de façon non limitative notamment l'anthémis, les amarantes, les arabettes, les armoises, les arroches, le bleuet, la bourse-à-pasteur, les bromes, les cardamines, le chardon, les chénopodes, le chiendent rampant, le coquelicot, le datura stramoine, l'euphorbe, les fumeterres, le gaillet gratteron, le galinsoga, les géraniums, le grémil des champs, les laiterons, les lamiers, les linaires, les liserons, les mourons, la moutarde des champs, le myosotis, les orties, l'oxalis, le passerage, la pensée des champs, le pissenlit, les plantains, la ravenelle, le ray-gras, la renoncule, les renouées, le séneçon, la spergule des champs, les véroniques et la vesce cultivée. Par exemple, des végétaux dits indésirables peuvent être ceux listés dans le guide des adventices édité par la Direction Régionale de l'Alimentation, de l'Agriculture et de la Forêt Nouvelle-Aquitaine.

Comme il ressort des exemples ci-après, les composés selon l'invention sont tout particulièrement avantageux à titre d'herbicides de post-levée.

Ils sont notamment avantageux d'une part comme herbicides à pénétration racinaire et d'autre part comme herbicides systémiques.

En particulier, les composés selon l'invention sont utilisés à titre d'herbicide sur des végétaux au stade de développement de la plantule, qui est une jeune plante germée ne comportant que quelques feuilles.

De préférence, le composé est apporté à la plante via le substrat de culture.

Ce substrat de culture peut être le sol mais également les milieux de cultures considérés pour les cultures en hydroponie.

Avantageusement, le composé est appliqué directement au contact du substrat de culture en surface duquel se développent les plantes à traiter. Comme il ressort des exemples ci-après, la plante est tuée moins de 96 h, de préférence moins de 48 h, et encore plus préférentiellement moins de 24 h après l'application.

Bien entendu, les composés selon l'invention sont formulés sous une formulation propice à leur application au niveau du site à traiter.

D'une manière générale, cette formulation dédiée à l'application est une formulation liquide et généralement aqueuse.

Cette formulation liquide peut être procurée en tant que telle à l'utilisateur, c'est-à-dire prête à l'application.

Il peut également s'agir d'une formulation liquide concentrée devant être diluée par l'utilisateur juste avant emploi.

Il peut également s'agir d'une formulation sous forme solide, de type granules par exemple, à appliquer en tant que telle par l'utilisateur ou devant être dispersée en milieu aqueux avant emploi.

D'une manière générale, il est privilégié une application sous une forme diluée, notamment en milieu aqueux.

Dans les exemples ci-après les composés testés sont mis en œuvre à une concentration allant de 1 µg/mL à 200 µg/mL, de préférence de 5µg/mL à 100 µg/mL, et encore plus préférentiellement de 10 µg/mL à 100µg/mL en composé(s) selon l'invention.

Bien entendu, cette concentration efficace est susceptible de varier en fonction de la nature chimique des composés selon l'invention, ainsi que de la variété et du stade de développement des végétaux indésirables à traiter.

Il est également avantageux que la dilution soit propice à être pulvérisée.

L'invention concerne également une composition phytotoxique comprenant à titre de substance active, au moins un composé selon l'invention.

Cette composition phytotoxique peut comprendre ledit composé à l'état pur ou sous la forme d'un extrait végétal le contenant.

Avantageusement, le composé selon l'invention y est combiné avec au moins un additif choisi parmi les fertilisants, régulateurs de croissance, et herbicides annexes.

L'expression « herbicide annexe » fait référence à un herbicide différent d'un composé de formule (I).

Il peut être en effet intéressant d'associer un composé selon l'invention à un herbicide annexe dont l'efficacité peut être notamment complémentaire de celle des composés selon l'invention. Toutefois, cet herbicide annexe est de préférence un composé sélectionné pour avoir un impact moindre sur l'environnement.

Le fertilisant est de préférence un fertilisant azoté, qui peut être choisi parmi l'urée, les sels d'ammonium, notamment le chlorure d'ammonium, le nitrate d'ammonium ou le sulfate d'ammonium, la poudre de cuir, d'os, ou de plante, le phosphate d'ammonium et de potassium ou leurs mélanges.

Les régulateurs de croissance peuvent être choisis parmi l'hydrazide maléique, le chloroméquat-chlorure (par exemple le Cyclocel^{®}), les dérivés d'auxine et leurs mélanges. Avantageusement, il s'agit de régulateurs de croissance d'origine naturelle, notamment l'acide salicylique, les sels d'acide salicylique comme l'ammonium salicylate, les jasmonates, les auxines, les gibbérellines, les cytokinines, l'acide lunularique, l'acide abscissique, et leurs mélanges.

Les herbicides annexes sont choisis parmi le nonanoate d'ammonium, l'acide nonanoïque, les acides gras de longueur de chaîne intermédiaire et leurs sels, les dérivés de l'urée, le borax, le sulfate de cuivre, les acides carboxyliques et leurs sels, les composés azotés, les sels de calcium, et leurs mélanges.

Une composition selon l'invention peut également contenir d'autres additifs annexes plus conventionnels comme les tensioactifs, les agents antimoussants, les agents désintégrants, les agents stabilisants, les agents humidifiants, les épaississants et les régulateurs de pH par exemple. Le choix de ces additifs est le plus souvent réalisé au regard de la forme considérée pour la composition.

En particulier, une composition phytotoxique selon l'invention peut se présenter sous la forme d'une composition solide, notamment sous forme de poudre ou de granules notamment propice à une dilution aqueuse. La composition solide peut également être dispersée directement sur la zone à désherber et solubilisée par humidification.

Une composition phytotoxique selon l'invention peut également se présenter d'origine sous la forme d'une composition liquide, notamment sous forme concentrée ou prête à l'emploi, notamment en solution ou en émulsion. De même, la composition sous forme de liquide concentré peut être diluée avant utilisation en ajoutant des adjuvants le cas échéant.

Selon un autre de ses aspects, la présente invention concerne un procédé pour contrôler le développement et/ou traiter des plantes indésirables en surface d'une zone cible comprenant la mise en contact de la zone cible avec une quantité efficace d'au moins un composé choisi parmi les composés de formule générale (I), (Ia) ou (Ib) tels que définis précédemment ainsi que leurs sels organiques ou inorganiques et leurs isomères, ou d'au moins une composition phytotoxique telle que définie précédemment.

Avantageusement, la mise en contact a lieu par pulvérisation d'au moins un composé ou d'au moins une composition tels que définis précédemment.

Les exemples qui suivent sont présentés à titre illustratif.

### Exemple 1

### Synthèse du composé A

### Etape 1 Préparation de la 5-(2-phényléthyl)-1,3-cyclohexadione

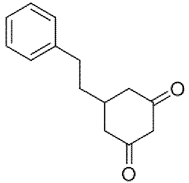

Il est procédé à l'aldolisation du cinnamaldéhyde avec de l'acétone (20 équivalents) en présence de NaOH (1 équivalent) à 0°C pendant 1 h pour former la cinnamylidèneacétone. La 1,3-cyclohexadione est ensuite obtenue par réaction d'annélation par condensation du cinnamylidèneacétone avec du malonate de diméthyle (1,1 équivalent) en présence de NaOMe (1,1 équivalent) sous reflux du méthanol pendant 12h. Après concentration sous vide le mélange brut est traité par une solution aqueuse de KOH (2N) au reflux pendant 2h, puis acidifié à pH = 2 par une solution 2N d'HCl et à nouveau chauffé au reflux pendant 2h. Enfin, les cétones purifiées par cristallisation sont converties par une hydrogénation catalysée par du palladium sur charbon (2 mol%) dans du MeOH pour obtenir l'intermédiaire 5-(2-phényléthyl)-1,3-cyclohexadione.

### Etape 2 Préparation de la dihydrooxépine bicyclique intermédiaire

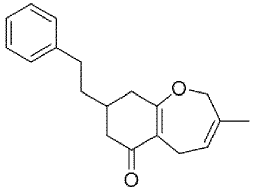

Du Cs₂CO₃ (1,1 équivalent) est ajouté à une solution de la 5-(2-phényléthyl)-1,3-cyclohexadione (1 équivalent) dans du DMSO (0,1 mol/L) et la solution est agitée à 20°C pendant 20 min. Ensuite, une solution de 1,4-dibromo-2-méthyl-2-butène (1,1 équivalent) dans du DMSO est ajoutée dans le mélange à 20°C. Le mélange réactionnel est agité à 20°C pendant 12 h, avant d'être dilué avec Et₂O et stoppé avec de l'eau froide (0°C). La phase organique est lavée 3 fois à la saumure (solution saturée de NaCl). Les phases aqueuses sont ensuite extraites 3 fois avec de l'éther diéthylique. Les extraits organiques combinés sont séchés sur du Na₂SO₄ et concentrés sous pression réduite, en évitant de chauffer au-dessus de 20°C. Le résidu est ensuite purifié par chromatographie flash sur un gel de silice en utilisant une colonne réfrigérée (<10°C) pour fournir la dihydrooxépine bicyclique intermédiaire sous forme d'un mélange 4:1 de régioisomères méthylés en positions 3 et 4, respectivement.

### Etape 3 Préparation du composé A

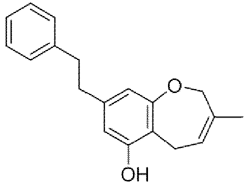

Le composé précédent est dihydroxylé en présence de K₂Os₂O₄·2H₂O (5 mol%) et de N-méthylmorpholine-N-oxyde (1,3 équivalents) dans un mélange 3:1 acétone/eau à 0°C pendant 1h. Après concentration du mélange, le mélange réactionnel est purifié 2 fois par chromatographie sur silice (éluent 1 : éther de pétrole/acétate d'éthyle 6:4; éluent 2 : dichlorométhane/méthanol 98:2) pour fournir le diol correspondant (solide blanc). Celui-ci est alors transformé en dimésylate par l'action de l'anhydride méthanesulfonique (5 équivalents) dans la pyridine. Après 16h à température ambiante, le produit dimésylé est extrait à l'acétate d'éthyle. Le produit brut est concentré et dilué dans le DMSO puis une solution de fluorure de tétrabutylammonium dans le THF (1M, 5 équivalents) est ajoutée à 0°C et le mélange est agité 1h à température ambiante (20°C). Après extraction à l'acétate d'éthyle et purification par chromatographie sur silice (éluent : éther de pétrole/acétate d'éthyle 9:1), le composé A est obtenue sous forme d'une huile incolore.

Les composés C, D et H sont obtenus de manière similaire au composé A, à l'exception de la décarboxylation de la 1,3-cyclohexadione qui n'est pas considérée pour ces 3 composés.

### Exemple 2

### Synthèse du composé D

### Etape 1 Préparation de la 4-(méthoxycarbonyl)-5-(2-phényléthyl)-1,3-cyclohexadione

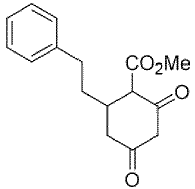

Comme précédemment, il est procédé à l'aldolisation du cinnamaldéhyde avec de l'acétone (20 équivalents) en présence de NaOH (1 équivalent) à 0°C pendant 1 h pour former la cinnamylidèneacétone. La 1,3-cyclohexadione est ensuite obtenue par réaction d'annélation par condensation du cinnamylidèneacétone avec du malonate de diméthyle (1,1 équivalent) en présence de NaOMe (1,1 équivalent) sous reflux du méthanol pendant 12h. Le pH est alors ajusté à 5 avant concentration sous pression réduite et extraction du résidu aqueux par l'acétate d'éthyle. Après concentration, le résidu solide est lavé à l'éther diéthylique puis recristallisé dans MeOH/Et₂O pour obtenir l'intermédiaire sous forme d'un solide blanc. Enfin, une hydrogénation catalysée par du palladium sur charbon (2 mol%) dans du MeOH permet d'obtenir l'intermédiaire 4-(méthoxycarbonyl)-5-(2-phényléthyl)-1,3-cyclohexadione.

### Etape 2 Préparation de la dihydrooxépine bicyclique intermédiaire

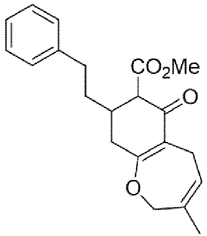

Du Cs₂CO₃ (1,1 équivalent) est ajouté à une solution de la 4-(méthoxycarbonyl)-5-(2-phényléthyl)-1,3-cyclohexadione (1 équivalent) dans du DMSO (0,1 mol/L) et la solution est agitée à 20°C pendant 20 min. Ensuite, une solution de 1,4-dibromo-2-méthyl-2-butène (1,1 équivalent) dans du DMSO est ajoutée dans le mélange à 20°C. Le mélange réactionnel est agité à 20°C pendant 12 h, avant d'être dilué avec Et₂O et stoppé avec de l'eau froide (0°C). La phase organique est lavée 3 fois à la saumure (solution saturée de NaCl). Les phases aqueuses sont ensuite extraites 3 fois avec de l'éther diéthylique. Les extraits organiques combinés sont séchés sur du Na₂SO₄ et concentrés sous pression réduite, en évitant de chauffer au-dessus de 20°C. Le résidu est ensuite purifié par chromatographie flash sur un gel de silice en utilisant une colonne réfrigérée (<10°C) pour fournir la dihydrooxépine bicyclique intermédiaire sous forme d'un mélange 1:1 de régioisomères esters et 4:1 méthyliques.

### Etape 3 Préparation du composé D

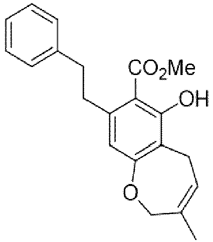

Le mélange de dihydrooxépines précédemment synthétisé est dilué dans le THF et NaH (1,2 équivalents) est ajouté à 0°C. Après 30 minutes, une solution de bromure de phénylsélénium (1,3 équivalents) dans le THF est ajoutée goutte à goutte à 0°C puis le mélange est agité 1h. Le mélange est extrait à l'éther diéthylique, les phases organiques sont séchées avec Na₂SO₄ et le solvant évaporé. Le mélange brut est passé sur une colonne courte de silice, éluant avec éther de pétrole/acétate d'éthyle 8:2 pour fournir l'intermédiaire sélénié impur. Ce dernier est solubilisé dans du dichlorométhane et une solution 30% de H₂O₂ est ajoutée en excès (>2 équivalents) à 0°C. Après 1 heure à température ambiante, la réaction est arrêtée par ajout d'une solution aqueuse saturée de Na₂S₂O₃. Le mélange est extrait à l'éther diéthylique et les phases organiques sont séchées avec Na₂SO₄. Une purification par chromatographie sur silice (éluent éther de pétrole/dichlorométhane 4:1) conduit au composé D pur.

### Exemple 3

### Synthèse du composé H

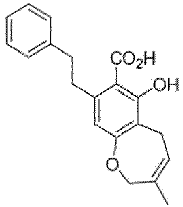

Le composé D est dilué dans un mélange THF/eau 1:1 et LiOH (2 équivalents) est ajouté à température ambiante. Après agitation à 50°C pendant 12h, la réaction est arrêtée par ajout d'une solution aqueuse 1N d'HCl et extraite à l'acétate d'éthyle. Les phases organiques sont évaporées et le résidu est chromatographié sur silice (éluent éther de pétrole/acétate d'éthyle/dichlorométhane 5:3:2) pour fournir le composé H sous forme de cristaux incolores.

### Exemple 4

### Synthèse du composé C

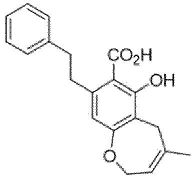

Le composé C, régioisomère méthylique du composé H, a été obtenu comme produit secondaire de l'hydrolyse alcaline d'un mélange régioisomérique du composé D, après purification.

### Exemple 5

### Synthèse du composé E

### Etape 1 Préparation de la dihydrooxépine bicyclique intermédiaire

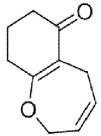

Du Cs₂CO₃ (1,1 équivalent) est ajouté à une solution de la 1,3-cyclohexadione (1 équivalent) dans du DMSO (0,1 mol/L) et la solution est agitée à 20°C pendant 20 min. Ensuite, une solution de 1,4-dibromo-2-butène (1,1 équivalent) dans du DMSO est ajoutée dans le mélange à 20°C. Le mélange réactionnel est agité à 20°C pendant 12 h, avant d'être dilué avec Et₂O et stoppé avec de l'eau froide (0°C). La phase organique est lavée 3 fois à la saumure (solution saturée de NaCl). Les phases aqueuses sont ensuite extraites 3 fois avec de l'éther diéthylique. Les extraits organiques combinés sont séchés sur du Na₂SO₄ et concentrés sous pression réduite, en évitant de chauffer au-dessus de 20°C. Le résidu est ensuite purifié par chromatographie flash sur un gel de silice en utilisant une colonne réfrigérée (<10°C) pour fournir la dihydrooxépine bicyclique intermédiaire.

### Etape 2 Préparation du composé E (2,5-dihydrobenzoxépine)

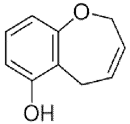

Le composé précédent est dihydroxylé en présence de OsO₄ (5 mol%) et de N-méthylmorpholine-N-oxyde (1,3 équivalents) dans un mélange 3:1 acétone/eau à 0°C pendant 20 min. Après concentration, le mélange réactionnel est purifié par chromatographie sur silice (éluent : acétate d'éthyle) pour fournir le diol correspondant (cristaux blancs). Celui-ci est alors transformé en dimésylate par l'action du chlorure de méthanesulfonyle (5 équivalents) dans la pyridine. Après 16h à température ambiante, le produit dimésylé est extrait à l'acétate d'éthyle et les phases organiques sont lavées avec une solution aqueuse 1N HCl puis avec une solution saturée de NaHCO₃ puis à la saumure. Après séchage sur MgSO₄ et concentration, le dimésylate est obtenu sans plus de purification. Le produit brut est dilué dans le DMSO puis une solution de fluorure de tétrabutylammonium dans le THF (1M, 4 équivalents) est ajoutée à 0°C et le mélange est agité 1h à température ambiante (20°C). Après extraction à l'acétate d'éthyle et purification par chromatographie sur silice (éluent : éther de pétrole/acétate d'éthyle 9: 1), le composé E est obtenue sous forme de cristaux blancs.

### Exemple 6

### Test de l'activité herbicide de composés conformes à l'invention et d'un composé comparatif

Les composés ont été testés sur des plantules d'Arabidopsis thaliana cultivées en hydroponie au stade cotylédons. Les graines stériles sont mises à germer à la lumière en plaque de culture, en présence de 200 µL de milieu nutritif.

Après cinq jours de culture (temps 0 de l'essai), le milieu nutritif est remplacé par un volume équivalent (200 µL) de ce même milieu contenant le composé à tester à différentes concentrations.

Les résultats sont résumés dans le tableau 2 ci-après.

La manifestation d'une activité herbicide est signalée par A pour Active dans le cas où la plante est tuée, c'est-à-dire quand les deux cotylédons ont perdu l'ensemble de leur coloration verte, 24 h et 96 h après application du produit.

L'absence d'activité herbicide est signalée par « N » pour Non active, dans le cas où aucune activité biologique n'est observée.

| Nom | Formule développée | Activité après 24h | | | Activité après 96h | | |
|---|---|---|---|---|---|---|---|
| | | 100 µg/mL | 50 µg/mL | 10 µg/mL | 100 µg/mL | 50 µg/mL | 10 µg/mL |
| Composé A | 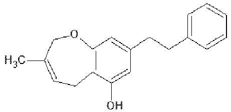 | A | A | N | A | A | N |
| Composé H | 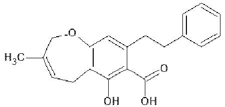 | A | A | A | A | A | A |
| Composé C | 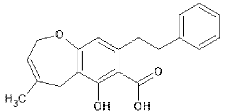 | A | A | A | A | A | A |
| Composé D | 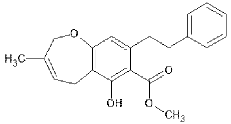 | N | N | N | A | A | N |
| Composé E (comparatif ) | 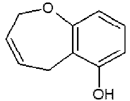 | N | N | N | N | N | N |

Ainsi, l'ensemble des composés ont bien un effet herbicide, alors qu'un analogue simplifié sans phénalkyle Ph(CH₂)ₙ ne montre qu'un effet herbicide très faible sur les plantules après 120 h à concentration élevée de 100 µg/mL.

## Revendications

1. Utilisation à titre d'herbicide, notamment d'herbicide à pénétration racinaire, systémique et/ou de post-levée, d'au moins un composé choisi parmi les composés de formule générale (I) 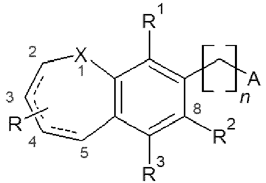
ledit composé de formule générale (I) répondant à la formule générale (Ia) : 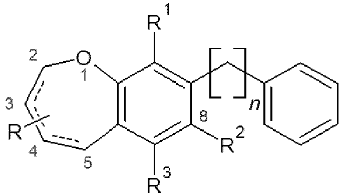
dans laquelle
• *n* est un entier variant de 1 à 6,
• R¹, R² et R³ représentent indépendamment les uns des autres, un atome d'hydrogène ou d'halogène, un radical alkyle en C₁ à C₅ ou un groupement choisi parmi -OH, -COOH, -COOR'', -OR'' et -SO₂R" avec R" étant un radical alkyle en C₁ à C₅, avec les radicaux alkyle pouvant être substitués par un ou plusieurs atomes d'halogène ou groupements hydroxyles, avec de préférence R² représentant un groupement -COOH,
• R représente un radical alkyle ou cycloalkyle en C₁ à C₅, éventuellement substitué par un ou plusieurs atomes d'halogène, et
• le symbole 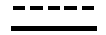 figure une liaison simple ou une liaison double en position 2, 3 ou 4 de l'hétérocycle condensé à 7 chainons avec au moins une double liaison étant présente,
et leurs sels organiques ou inorganiques et leurs isomères.

2. Utilisation selon la revendication 1 **caractérisée en ce que** R est un radical alkyle de 1 à 3 atomes de carbone, et de préférence est un méthyle, le radical alkyle étant éventuellement substitué par un ou plusieurs atomes d'halogène.

3. Utilisation selon la revendication 1 ou 2, **caractérisée en ce que** n est un entier variant de 1 à 3 et de préférence est égal à 2.

4. Utilisation selon l'une quelconque des revendications précédentes, **caractérisée en ce que** ledit composé répond à la formule générale (Ib) : 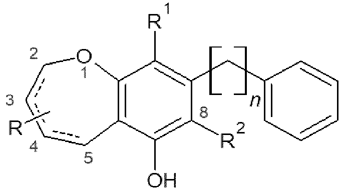 avec R, R¹, R² et n étant tels que définis dans l'une quelconque des revendications précédentes, et leurs sels organiques ou inorganiques et leurs isomères, avec de préférence R² représentant un groupement -COOH.

5. Utilisation selon l'une quelconque des revendications précédentes, **caractérisée en ce que** l'hétérocycle condensé possède une unique double-liaison en position 2, 3, ou 4, de préférence en position 3.

6. Utilisation selon l'une quelconque des revendications précédentes, **caractérisée en ce que** R¹ est choisi parmi l'atome d'hydrogène et un groupement -COOH, et de préférence est un atome d'hydrogène.

7. Utilisation selon l'une quelconque des revendications précédentes, **caractérisée en ce que** R² est choisi parmi l'atome d'hydrogène, un groupement -COOH et un groupement -COOR'', avec R" étant un radical alkyle en C₁ à C₅, en particulier avec R" étant un méthyle, de préférence R² est choisi parmi l'atome d'hydrogène et un groupement -COOH, et plus préférentiellement R² est un groupement -COOH.

8. Utilisation selon l'une quelconque des revendications précédentes, **caractérisée en ce que** ledit composé répond à la formule générale (Ic) : 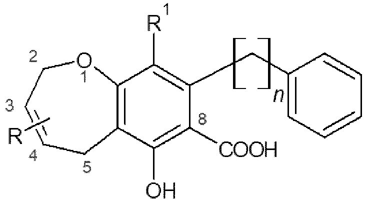 la position 3 ou 4 étant substituée par un radical R, avec R, R¹ et n étant tels que définis dans l'une quelconque des revendications précédentes, ou l'un de ses sels organiques ou inorganiques et isomères.

9. Utilisation selon l'une quelconque des revendications précédentes, **caractérisée en ce que** ledit composé est choisi parmi : 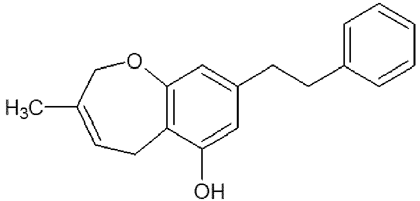 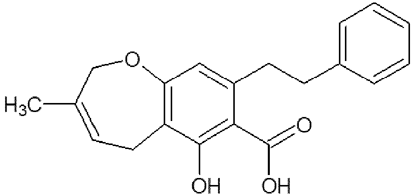 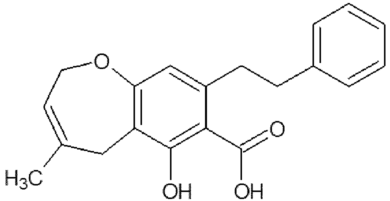 et 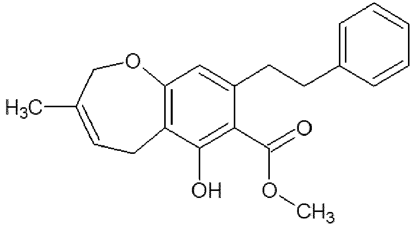
et leurs sels organiques ou inorganiques et leurs isomères,
et de préférence choisi parmi : 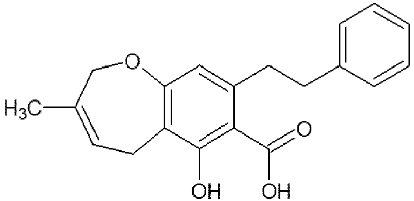
et 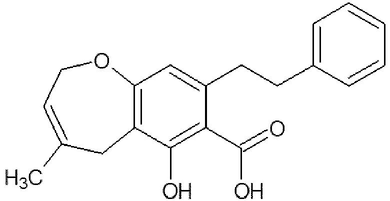
et leurs sels organiques ou inorganiques et leurs isomères.

10. Utilisation selon l'une quelconque des revendications précédentes, **caractérisée en ce que** ledit composé est mis en œuvre sous une forme isolée, naturelle ou synthétique ; ou
ledit composé est mis en œuvre sous la forme d'un extrait végétal le contenant, en particulier sous la forme d'un extrait de plantes hépatiques le contenant ; et/ou
ledit composé est mis en œuvre sous une forme diluée, notamment en milieu aqueux.

11. Utilisation selon l'une quelconque des revendications précédentes, **caractérisée en ce que** ledit composé est généré *in situ* ou juste avant emploi, notamment par hydrolyse, à partir d'un précurseur.

12. Composition phytotoxique comprenant au moins un composé tel que défini dans l'une quelconque des revendications 1 à 11 en combinaison avec au moins un additif choisi parmi les fertilisants, régulateurs de croissance et herbicides annexes, en particulier se présentant sous la forme d'une composition solide, notamment sous forme de poudre ou de granules, ou d'une composition liquide, notamment sous forme concentrée ou prête à l'emploi, notamment en solution ou en émulsion,
les herbicides annexes étant choisis parmi le nonanoate d'ammonium, l'acide nonanoïque, les acides gras de longueur de chaîne intermédiaire et leurs sels, les dérivés de l'urée, le borax, le sulfate de cuivre, les acides carboxyliques et leurs sels, les composés azotés, les sels de calcium, et leurs mélanges.

13. Procédé pour contrôler le développement et/ou traiter des plantes indésirables en surface d'une zone cible comprenant la mise en contact de la zone cible avec une quantité efficace d'au moins un composé tel que défini dans l'une quelconque des revendications 1 à 11 ou d'au moins une composition selon la revendication 12, en particulier la mise en contact ayant lieu par pulvérisation d'au moins un composé tel que défini dans l'une quelconque des revendication 1 à 11 ou d'au moins une composition selon la revendication 12.

## Patentansprüche

1. Verwendung als Herbizid, insbesondere als Wurzelpenentrationsherbizid, systemisches Herbizid und/oder Nachauflauf-Herbizid, von mindestens einer Verbindung, ausgewählt aus den Verbindungen der allgemeinen Formel (I) 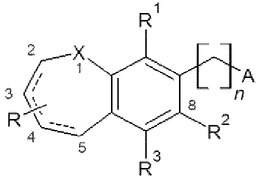
wobei die Verbindung der allgemeinen Formel (I) der allgemeinen Formel (Ia) entspricht: 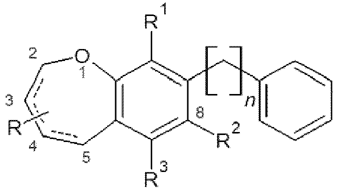
in der
• n eine ganze Zahl im Bereich von 1 bis 6 ist,
• R¹, R² und R³ unabhängig voneinander für ein Wasserstoff- oder Halogenatom, einen C₁- bis C₅-Alkylrest oder eine Gruppe, die aus -OH, -COOH, -COOR", -OR" und - SO₂R" ausgewählt ist, steht, wobei R" ein C₁- bis C₅-Alkylrest ist, wobei die Alkylreste durch ein oder mehrere Halogenatome oder Hydroxylgruppen substituiert sein können, wobei R² vorzugsweise für eine -COOH-Gruppe steht,
• R für einen C₁- bis C₅-Alkyl- oder -Cycloalkylrest, der gegebenenfalls durch ein oder mehrere Halogenatome substituiert ist, steht, und
• das Symbol 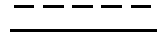 eine Einfach- oder Doppelbindung an Position 2, 3 oder 4 des siebengliedrigen anellierten Heterocyclus darstellt, wobei mindestens eine Doppelbindung vorliegt;
und organischen oder anorganischen Salzen davon und Isomeren davon.

2. Verwendung nach Anspruch 1, **dadurch gekennzeichnet, dass** R ein Alkylrest mit 1 bis 3 Kohlenstoffatomen und vorzugsweise ein Methyl ist, wobei der Alkylrest gegebenenfalls durch ein oder mehrere Halogenatome substituiert ist.

3. Verwendung nach Anspruch 1 oder 2, **dadurch gekennzeichnet, dass** n eine ganze Zahl im Bereich von 1 bis 3 ist und vorzugsweise gleich 2 ist.

4. Verwendung nach einem der vorangehenden Ansprüche, **dadurch gekennzeichnet, dass** die Verbindung der allgemeinen Formel (Ib) entspricht: 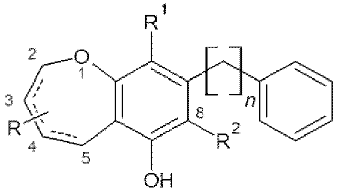 wobei R, R¹, R² und n wie in einem der vorangehenden Ansprüche definiert sind, und organische oder anorganische Salze davon und Isomere davon, wobei R² vorzugsweise für eine -COOH-Gruppe steht.

5. Verwendung nach einem der vorangehenden Ansprüche, **dadurch gekennzeichnet, dass** der anellierte Heterocyclus eine einzige Doppelbindung in Position 2, 3 oder 4, vorzugsweise in Position 3, aufweist.

6. Verwendung nach einem der vorangehenden Ansprüche, **dadurch gekennzeichnet, dass** R¹ aus einem Wasserstoffatom und einer -COOH-Gruppe ausgewählt ist und vorzugsweise ein Wasserstoffatom ist.

7. Verwendung nach einem der vorangehenden Ansprüche, **dadurch gekennzeichnet, dass** R² aus Wasserstoff, einer - COOH-Gruppe und einer -COOR"-Gruppe ausgewählt ist, wobei R" ein C₁- bis C₅-Alkylrest ist, wobei R" insbesondere ein Methyl ist, R² vorzugsweise aus einem Wasserstoffatom und einer -COOH-Gruppe ausgewählt ist und R² weiter bevorzugt eine -COOH-Gruppe ist.

8. Verwendung nach einem der vorangehenden Ansprüche, **dadurch gekennzeichnet, dass** die Verbindung der allgemeinen Formel (Ic) entspricht: 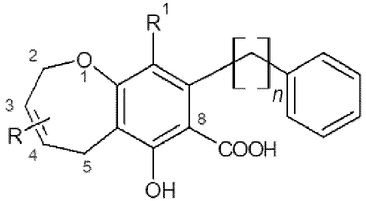 wobei Position 3 oder 4 durch einen Rest R substituiert ist, wobei R, R¹ und *n* wie in einem der vorangehenden Ansprüche definiert sind, oder einem der organischen oder anorganischen Salze und Isomere davon.

9. Verwendung nach einem der vorangehenden Ansprüche, **dadurch gekennzeichnet, dass** die Verbindung ausgewählt ist aus: 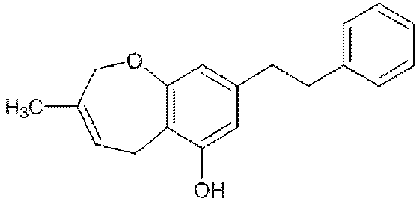 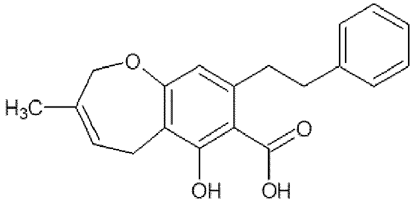 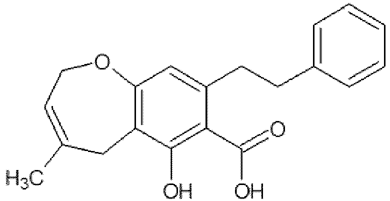 und 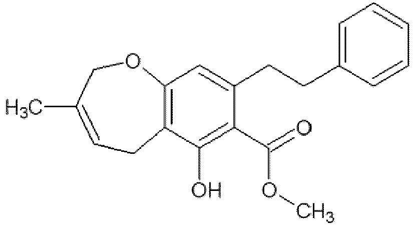
und organischen oder anorganischen Salzen davon und Isomeren davon,
und vorzugsweise ausgewählt ist aus: 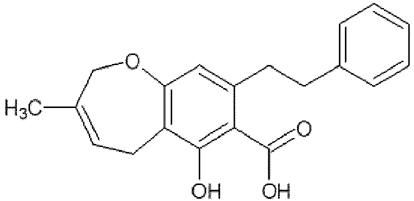 und 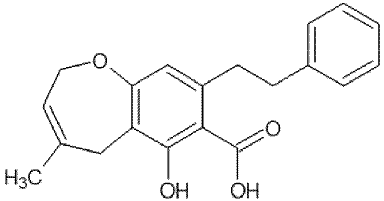
und organischen oder anorganischen Salzen davon und Isomeren davon.

10. Verwendung nach einem der vorangehenden Ansprüche, **dadurch gekennzeichnet, dass** die Verbindung in isolierter, natürlicher oder synthetischer Form verwendet wird; oder
die Verbindung in Form eines sie enthaltenden Pflanzenextrakts, insbesondere in Form eines sie enthaltenden Leberpflanzenextrakts, verwendet wird; und/oder
die Verbindung in verdünnter Form, insbesondere in wässrigem Medium, verwendet wird.

11. Verwendung nach einem der vorangehenden Ansprüche, **dadurch gekennzeichnet, dass** die Verbindung *in situ* oder unmittelbar vor der Verwendung, insbesondere durch Hydrolyse, aus einem Vorläufer erzeugt wird.

12. Phytotoxische Zusammensetzung, umfassend mindestens eine Verbindung gemäß einem der Ansprüche 1 bis 11 in Kombination mit mindestens einem Zusatzstoff, der aus Düngemitteln, Wachstumsregulatoren und Hilfsherbiziden ausgewählt ist, die insbesondere in Form einer festen Zusammensetzung, insbesondere in Form von Pulver oder Granulat, oder einer flüssigen Zusammensetzung, insbesondere in konzentrierter oder gebrauchsfertiger Form, insbesondere in Lösung oder in Emulsion, vorliegt, wobei die Hilfsherbizide aus Ammoniumnonanoat, Nonansäure, Fettsäuren mit mittlerer Kettenlänge und Salzen davon, Harnstoffderivaten, Borax, Kupfersulfat, Carbonsäuren und Salzen davon, Stickstoffverbindungen, Calciumsalzen und Mischungen davon ausgewählt sind.

13. Verfahren zur Steuerung der Entwicklung und/oder Behandlung unerwünschter Pflanzen auf der Oberfläche einer Zielzone, umfassend das Inkontaktbringen der Zielzone mit einer wirksamen Menge mindestens einer Verbindung gemäß einem der Ansprüche 1 bis 11 oder mindestens einer Zusammensetzung nach Anspruch 12, insbesondere das Inkontaktbringen durch Sprühen mindestens einer Verbindung gemäß einem der Ansprüche 1 bis 11 oder mindestens einer Zusammensetzung nach Anspruch 12.

## Claims

1. Use as herbicide, in particular as root-penetrating, systemic and/or post-emergence herbicide, of at least one compound chosen from the compounds of general formula (I) 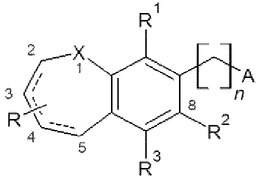
said compound of general formula (I) corresponding to the general formula (Ia): 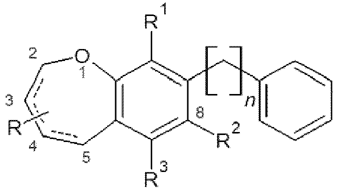
in which
• *n* is an integer ranging from 1 to 6,
• R¹, R² and R³ independently of one another represent a hydrogen or halogen atom, a C₁ to C₅ alkyl radical or a group chosen from -OH, -COOH, -COOR", -OR" and -SO₂R'', with R" being a C₁ to C₅ alkyl radical, with it being possible for the alkyl radicals to be substituted by one or more halogen atoms or hydroxyl groups, with R² preferably representing a -COOH group,
• R represents a C₁ to C₅ alkyl or cycloalkyl radical, optionally substituted by one or more halogen atoms, and
• the symbol 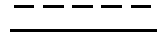 indicates a single bond or a double bond in position 2, 3 or 4 of the 7-membered fused heterocycle, with at least one double bond being present, and organic or inorganic salts thereof and isomers thereof.

2. Use according to Claim 1, **characterized in that** R is an alkyl radical having 1 to 3 carbon atoms, and preferably is a methyl, the alkyl radical optionally being substituted by one or more halogen atoms.

3. Use according to Claim 1 or 2, **characterized in that** *n* is an integer ranging from 1 to 3 and preferably is equal to 2.

4. Use according to any one of the preceding claims, **characterized in that** said compound corresponds to the general formula (Ib): 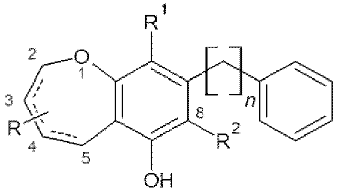 with R, R¹, R² and n being as defined in any one of the preceding claims, and organic or inorganic salts thereof and isomers thereof, with R² preferably representing a - COOH group.

5. Use according to any one of the preceding claims, **characterized in that** the fused heterocycle has a single double bond in position 2, 3 or 4, preferably in position 3.

6. Use according to any one of the preceding claims, **characterized in that** R¹ is chosen from a hydrogen atom and a -COOH group, and preferably is a hydrogen atom.

7. Use according to any one of the preceding claims, **characterized in that** R² is chosen from a hydrogen atom, a -COOH group and a -COOR" group, with R" being a C₁ to C₅ alkyl radical, in particular with R" being a methyl; preferably R² is chosen from a hydrogen atom and a -COOH group; and more preferentially R² is a -COOH group.

8. Use according to any one of the preceding claims, **characterized in that** said compound corresponds to the general formula (Ic): 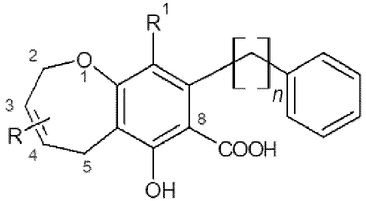 position 3 or 4 being substituted by a radical R, with R, R¹ and *n* being as defined in any one of the preceding claims, or one of the organic or inorganic salts and isomers thereof.

9. Use according to any one of the preceding claims, **characterized in that** said compound is chosen from: 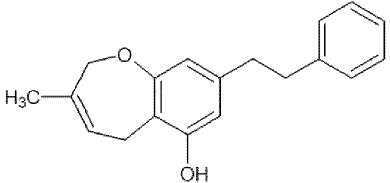 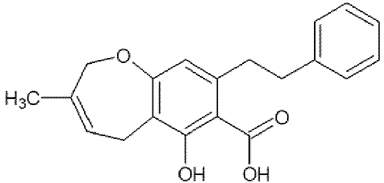 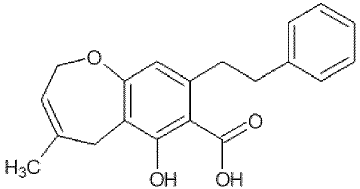 and 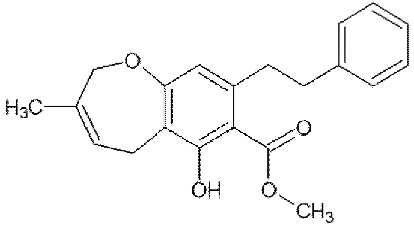
and organic or inorganic salts thereof and isomers thereof,
and preferably chosen from: 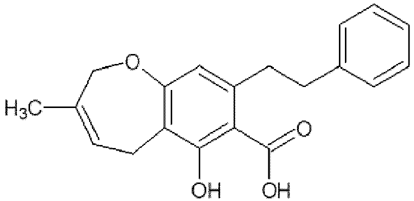 and 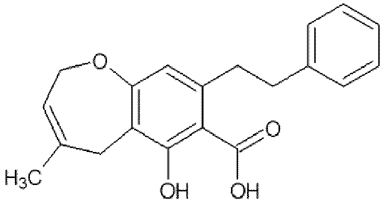
and organic or inorganic salts thereof and isomers thereof.

10. Use according to any one of the preceding claims, **characterized in that** said compound is used in an isolated, natural or synthetic form; or
said compound is used in the form of a plant extract containing said compound, in particular in the form of an extract of hepatic plants containing said compound; and/or
said compound is used in a diluted form, in particular in an aqueous medium.

11. Use according to any one of the preceding claims, **characterized in that** said compound is generated *in situ* or just before use, in particular by hydrolysis, from a precursor.

12. Phytotoxic composition comprising at least one compound as defined in any one of Claims 1 to 11 in combination with at least one additive chosen from fertilizers, growth regulators and auxiliary herbicides, especially being in the form of a solid composition, in particular in the form of a powder or of granules, or a liquid composition, in particular in concentrated or ready-to-use form, in particular in solution or in emulsion,
the auxiliary herbicides being chosen from ammonium nonanoate, nonanoic acid, fatty acids of intermediate chain length and salts thereof, urea derivatives, borax, copper sulfate, carboxylic acids and salts thereof, nitrogen-based compounds, calcium salts, and mixtures thereof.

13. Method for controlling the development of and/or treating undesirable plants on the surface of a target zone, comprising contacting the target zone with an effective amount of at least one compound as defined in any one of Claims 1 to 11 or at least one composition according to Claim 12, the contacting in particular taking place by spraying at least one compound as defined in any one of Claims 1 to 11 or at least one composition according to Claim 12.
